# EUROPEAN PATENT APPLICATION

(11) **EP 3 706 002 A1**
(43) Date of publication of application: **09.09.2020**
(21) Application number: 19201751.5
(22) Date of filing: 07.10.2019
(51) Int. Cl.: G06F 12/02

(54) **MEMORY MANAGEMENT APPARATUS AND METHOD OF INVERTER**

(30) Priority: 04.03.2019 KR 20190024813
(71) Applicant: LSIS Co., Ltd., Gyeonggi-do 14119 (KR)
(72) Inventor: JEON, Mi Young, 14118 Gyeonggi-do (KR)
(74) Representative: K&L Gates LLP

(57) **Abstract**

The present invention relates to a memory management apparatus of an inverter, which stores and manages pieces of information about a plurality of allocation regions allocated to a memory buffer in a memory map as a plurality of elements. The memory management apparatus includes an index setting unit, an index storing unit, and an element searching unit. Here, the index setting unit sets map indexes in the plurality of elements stored in the memory map. The index storing unit stores each of the map indexes in a corresponding one of the plurality of allocation regions allocated to the memory buffer. The element searching unit searches the memory map for the elements using the map indexes stored in the memory buffer.

## Description

### CROSS-REFERENCE TO RELATED APPLICATION

This application claims priority to and the benefit of Korean Patent Application No. 2019-0024813, filed on March 4, 2019, the disclosure of which is incorporated herein by reference in its entirety.

### BACKGROUND

### 1. Field of the Invention

The present invention relates to a memory management apparatus and method, and more particularly, to a memory management apparatus and method of an inverter.

### 2. Discussion of Related Art

Inverters are devices which efficiently control a motor and reduce power consumption of the motor to improve energy efficiency.

Such an inverter is an embedded system. When software is developed, instead of a standard library function, in consideration of performance, a function suitable for a system is generally created and used in the inverter.

In addition, a memory management system is created and used directly. In this case, a search speed in a memory map is important.

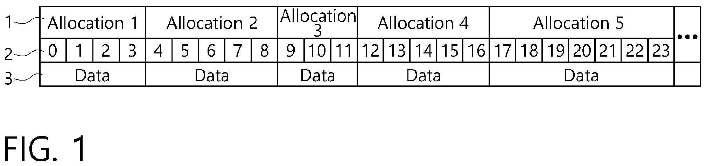

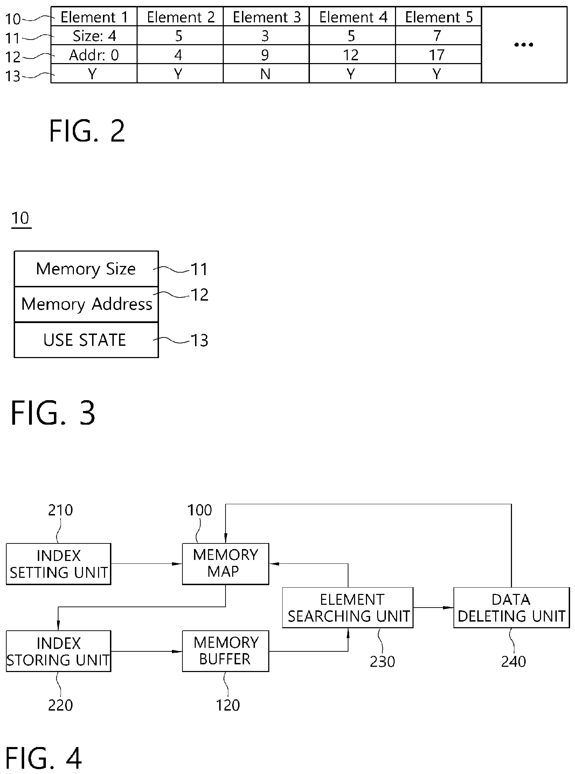

FIG. 1 is a diagram illustrating a conventional memory buffer. FIG. 2 is a diagram illustrating a conventional memory map. FIG. 3 is a diagram illustrating information about an element stored in the memory map of FIG. 2.

Referring to FIG. 1, the memory buffer stores a memory buffer address 2 and data 3 using the memory buffer for each of a plurality of allocation regions 1.

In the memory map, allocation information of the memory buffer is stored and managed in an element form.

Referring to FIGS. 2 and 3, the memory map stores attribute information including a memory size 11, a start address 12, and a use state 13 of the allocation region 1 for each of a plurality of elements 10.

Meanwhile, reading and writing of data are performed using an address of the memory buffer, and data that is no longer used should also be deleted from the memory buffer by finding a corresponding address in the memory buffer.

However, in order to find the corresponding address in the memory map, addresses stored in the memory map should be sequentially compared and found, which takes a long time and lowers efficiency.

### SUMMARY OF THE INVENTION

The present invention is directed to providing a memory management apparatus and method of an inverter, which are capable of more rapidly and easily searching a memory map for a specific element.

In addition, the present invention is directed to providing a memory management apparatus and method of an inverter, which may be relatively rapidly and efficiently operated when data about a corresponding allocation region in a memory buffer is deleted and may be effectively applied to an embedded system which uses a limited resource and a low performance component.

The technical problems solved by the present invention are not limited to the above technical problems, and other technical problems which are not mentioned above may be apparently understood by one skilled in the art through the following detailed description.

According to an aspect of the present invention, there is provided a memory management apparatus of an inverter, which stores and manages pieces of information about a plurality of allocation regions allocated to a memory buffer in a memory map as a plurality of elements, the memory management apparatus including an index setting unit which sets map indexes in the plurality of elements stored in the memory map, an index storing unit which stores each of the map indexes in a corresponding one of the plurality of allocation regions allocated to the memory buffer, and an element searching unit which searches the memory map for the elements using the map indexes stored in the memory buffer.

The memory management apparatus may further include a data deleting unit which changes a use state of the element found by the element searching unit from in use to not in use and deletes data stored in the memory buffer.

The index storing unit may store the map index in a start address of each of the plurality of allocation regions.

The memory buffer may store the data from an address subsequent to the start address in which the map index is stored.

The element searching unit may access an address immediately preceding an address in which data to be deleted is stored, read the map index, and access the element including the read map index.

The memory map may store attribute information including the map index, a size of the allocation region, a start address, and a use state for each of the plurality of elements.

According to another aspect of the present invention, there is provided a memory management method of an inverter, in which pieces of information about a plurality of allocation regions allocated to a memory buffer are stored and managed in a memory map as a plurality of elements, the memory management method including setting map indexes in the plurality of elements stored in the memory map, storing each of the map indexes in a corresponding one of the plurality of allocation regions allocated to the memory buffer, and searching the memory map for the elements using the map indexes stored in the memory buffer.

The memory management method may further include changing a use state of the found element from in use to not in use and deleting data stored in the memory buffer.

The storing of the map index may include storing the map index in a start address of each of the plurality of allocation regions and storing data from an address subsequent to the start address in which the map index is stored.

The searching for the elements may include accessing an address immediately preceding an address in which data to be deleted is stored, reading the map index, and accessing the element including the read map index.

### BRIEF DESCRIPTION OF THE DRAWINGS

FIG. 1 is a diagram illustrating a conventional memory buffer.
FIG 2 is a diagram illustrating a conventional memory map.
FIG. 3 is a diagram illustrating information about an element stored in the memory map of FIG. 2.
FIG. 4 is a block diagram illustrating a memory management apparatus of an inverter according to an embodiment of the present invention.
FIG. 5 is a diagram illustrating a memory map according to the embodiment of the present invention.
FIG. 6 is a diagram illustrating information about an element stored in the memory map of FIG. 5.
FIG. 7 is a diagram illustrating a memory buffer according to the embodiment of the present invention.
FIG. 8 is a flowchart illustrating a memory management method of an inverter according to an embodiment of the present invention.

### DETAILED DESCRIPTION OF EXEMPLARY EMBODIMENTS

The terms and words used in the present specification and the claims should not be limitedly interpreted as having common and dictionary meanings but should be interpreted as having meanings and concepts conforming to the technical spirit of the present invention based on the principle that an inventor can appropriately define the concepts of terms and words in order to describe his or her invention in the best way.

Accordingly, since the embodiments described in the present specification and the configurations shown in the drawings are merely the most exemplary embodiments of the present invention and do not represent all of the technical spirit of the present invention, it should be appreciated that there may be various equivalents and modifications that may replace the configurations at the time at which the present application is filed.

Hereinafter, embodiments of the present invention will be described in detail with reference to the accompanying drawings which may allow one of ordinary skill in the art to easily perform the present invention.

First, a memory may store control data and motor parameters, which are for controlling operation of an inverter.

The above-described memory may include a nonvolatile memory such as a read only memory (ROM), an erasable programmable read only memory (EPROM), or an electrically erasable programmable read only memory (EEPROM).

The nonvolatile memory may be operated as an auxiliary memory device of a volatile memory and may store a control program and control data, which are for implementing motor parameters.

In addition, even when the inverter is powered off, data stored in the nonvolatile memory is preserved.

The motor parameters may be transmitted to the inverter through a data bus using a communication interface according to a preset communication protocol. Here, the communication interface may communicate with the inverter according to an inter-integrated circuit (I2C) protocol, a serial peripheral interface (SPI) protocol, or a universal asynchronous receive-transmit (UART) protocol.

In particular, the I2C protocol is widely used to read data from the nonvolatile memory or write data to the nonvolatile memory. When the I2C protocol is used, the communication interface may transmit and receive data through a serial clock line (SCL) and a serial data line (SDA).

A memory management apparatus according to an embodiment of the present invention controls operations of the memory and the communication interface and manages the motor parameters stored in the memory.

For example, the memory management apparatus may receive the motor parameters from a control circuit through the communication interface and store the motor parameters in the memory. In addition, the memory management apparatus may also load the motor parameters from the memory and transmit the motor parameters of the memory to the control circuit through the communication interface.

The memory, the communication interface, and the memory management apparatus have been described separately, but the memory, the communication interface, and the memory management apparatus may be implemented as one chip. In other words, one chip may perform all functions such as a function of storing the motor parameters, a function of communicating with the control circuit, and a function of managing the motor parameters.

For example, the memory may be implemented as a nonvolatile block provided in one chip. For example, the memory management apparatus and the communication interface may be implemented by hardware such as a field-programmable gate array (FPGA) or an application specific integrated circuit (ASIC) or may be implemented by software stored in the memory.

As described above, the inverter may supply drive power for rotating the motor and may store the motor parameters of the motor. In addition, the inverter may transmit and receive the motor parameters through communication with the control circuit.

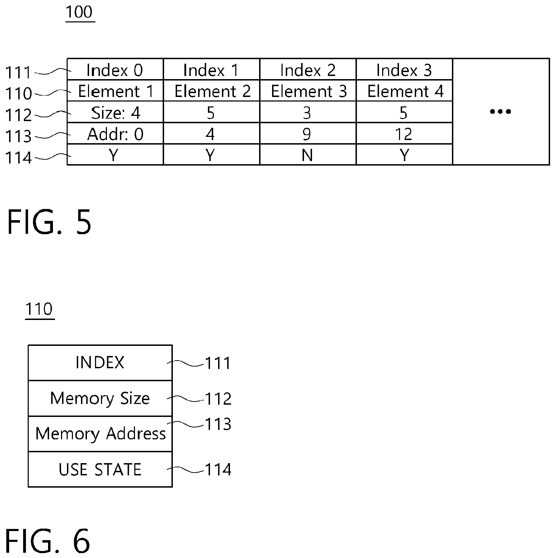

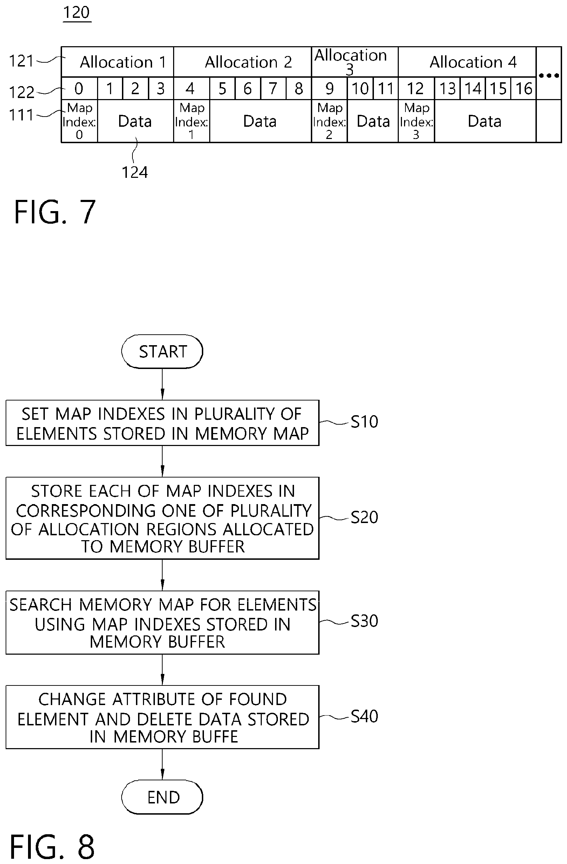

FIG. 4 is a block diagram illustrating a memory management apparatus of an inverter according to an embodiment of the present invention. FIG. 5 is a diagram illustrating a memory map according to the embodiment of the present invention. FIG. 6 is a diagram illustrating information about an element stored in the memory map of FIG. 6. FIG. 7 is a diagram illustrating a memory buffer according to the embodiment of the present invention.

The memory management apparatus of an inverter according to the embodiment of the present invention stores and manages pieces of information about a plurality of allocation regions 121 allocated to a memory buffer 120 in a memory map 100 as a plurality of elements 110.

Here, data for controlling operation of an inverter is stored in the memory buffer 120.

As shown in FIG. 4, the memory management apparatus of an inverter according to the embodiment of the present invention includes an index setting unit 210, an index storing unit 220, an element searching unit 230, and a data deleting unit 240.

The index setting unit 210 sets map indexes 111 in the plurality of elements 110 stored in the memory map 100.

The index storing unit 220 stores each of the map indexes 111 of the memory map 100 in a corresponding one of the plurality of allocation regions 121 allocated to the memory buffer 120.

Referring to FIGS. 5 and 6, the memory map 100 stores attribute information including the map index 111, a size 112 of the allocation region 121, a start address 113, and a use state 114 for each of the plurality of elements 110.

Referring to FIG. 7, the memory buffer 120 stores a memory buffer address 122, the map index 111 corresponding to each element 110 of the memory map 100, and data 124 using the memory buffer 120.

The index storing unit 220 stores the map index 111 in the start address of each of the plurality of allocation regions 121.

Accordingly, the memory buffer 120 stores the data 124 from an address subsequent to the start address in which the map index 111 is stored.

For example, as shown in FIG. 7, memory buffer addresses 0 to 3 122 may be allocated to a first allocation region 121, and memory buffer addresses 4 to 8 122 may be allocated to a second allocation region 121. Memory buffer addresses 9 to 11 122 may be allocated to a third allocation region 121, and memory buffer addresses 12 to 16 122 may be allocated to a fourth allocation region 121.

A map index (Map Index 0) 111 is stored in a start address (address 0) of the first allocation region (Allocation 1) 121, and the data 124 is stored in addresses 1 to 3 subsequent to the start address (address 0). A map index (Map Index 1) 111 is stored in a start address (address 4) of the second allocation region (Allocation 2) 121, and the data 124 is stored in addresses 5 to 8 subsequent to the start address (address 4). A map index (Map Index 2) 111 is stored in a start address (address 9) of the third allocation region (Allocation 3) 121, and the data 124 is stored in addresses 10 and 11 subsequent to the start address (address 9). A map index (Map Index 3) 111 is stored in a start address (address 12) of the fourth allocation region (Allocation 4) 121, and the data 124 is stored in addresses 13 to 16 subsequent to the start address (address 12).

In addition, referring to FIG. 5, in a first element (Element 1), the map index (Map Index 0) is set, and a memory size of 4, the start address (address 0), and a use state (in use (Y)) corresponding to the first allocation region (Allocation 1) 121 of the memory buffer 120 are stored. In a second element (Element 2), the map index (Map Index 1) is set, and a memory size of 5, the start address (address 4), and a use state (in use (Y)) corresponding to the second allocation region (Allocation 2) 121 of the memory buffer 120 are stored. In a third element (Element 3), the map index (Map Index 2) is set, and a memory size of 3, the start address (address 9), and a use state (not in use (N)) corresponding to the third allocation region (Allocation 3) 121 of the memory buffer 120 are stored. In a fourth element (Element 4), the map index (Map Index 3) is set, and a memory size of 5, the start address (address 12), and a use state (in use (Y)) corresponding to the fourth allocation region (Allocation 4) 121 of the memory buffer 120 are stored.

The element searching unit 230 searches the memory map 100 for the elements 110 using the map indexes 111 stored in the memory buffer 120.

The element searching unit 230 may access an address immediately preceding an address in which the data 124 to be deleted is stored, read the map index 111, and access the element 110 including the read map index 111.

For example, referring to FIGS. 5 and 7, when data stored in the second allocation region (Allocation 2) is to be deleted, the element searching unit 230 accesses address 4 immediately preceding addresses 5 to 8 in which the data is stored, determines the map index (Map Index 1), and accesses the second element (Element 2) including the map index (Map Index 1) read from the memory map 100.

As described above, the memory management apparatus of an inverter according to the embodiment of the present invention has an advantage in that a specific element may be more rapidly and easily searched for in the memory map 100 using the map index 111.

The data deleting unit 240 changes the use state of the element 110 found by the element searching unit 230 from "in use" to "not in use" and deletes the data stored in the memory buffer 120.

In the above-described example, the data deleting unit 240 may change the use state of the second element 2 from "in use (Y)" to "not in use (N)" and delete the data stored in the memory buffer 120.

As described above, since a specific element is relatively rapidly searched for in the memory map 100 using the map index 111, the memory management apparatus of an inverter according to the embodiment of the present invention may be relatively rapidly and efficiently operated when data about a corresponding allocation region in the memory buffer 120 is deleted. The memory management apparatus of an inverter according to the embodiment of the present invention may be effectively applied to an embedded system which uses a limited resource and a low performance component.

FIG. 8 is a flowchart illustrating a memory management method of an inverter according to an embodiment of the present invention.

Hereinafter, the memory management method of an inverter according to the exemplary embodiment of the present invention will be described with reference to FIGS. 1 to 8, but the same contents as those of the above-described memory management apparatus of an inverter will be omitted.

The memory management method of an inverter according to the embodiment of the present invention is a method of storing and managing pieces of information about the plurality of allocation regions 121 allocated to the memory buffer 120 in the memory map 100 as the plurality of elements 110.

Here, data for controlling operation of an inverter is stored in the memory buffer 120.

The memory management method of an inverter according to the embodiment of the present invention may include setting the map indexes 111 to the plurality of elements 110 stored in the memory map 100 (S10), storing each of the map indexes 111 in a corresponding one of the plurality of allocation regions 121 allocated to the memory buffer 120 (S20), and searching the memory map 100 for the elements 110 using the map indexes 111 stored in the memory buffer 120 (S30).

As described above, the memory management apparatus of an inverter according to the embodiment of the present invention has an advantage in that a specific element may be more rapidly and easily searched for in the memory map 100 using the map index 111.

In the storing of the map index (S20), the map index 111 is stored in the start address of each of the plurality of allocation regions 121, and the data 124 is stored from an address subsequent to the start address in which the map index 111 is stored.

In addition, the memory management method of an inverter according to the embodiment of the present invention may further include changing a use state of the found element 110 from "in use" to "not in use" and deleting the data stored in the memory buffer 120.

In the searching for the element (S30), an address immediately preceding an address, in which the data 124 to be deleted is stored, is accessed, the map index 111 is read, and the element 110 including the read map index 111 is accessed.

As described above, since a specific element is relatively rapidly searched for in the memory map 100 using the map index 111, the memory management method of an inverter according to the embodiment of the present invention may be relatively rapidly and efficiently operated when data about a corresponding allocation region in the memory buffer 120 is deleted. The memory management method of an inverter according to the embodiment of the present invention may be effectively applied to an embedded system which uses a limited resource and a low performance component.

According to the present invention, a specific element can be more rapidly and easily searched for in a memory map using a map index.

In addition, according to the present invention, since a specific element is relatively rapidly searched for in a memory map using a map index, a memory management apparatus of an inverter can be relatively rapidly and efficiently operated when data about a corresponding allocation region in a memory buffer is deleted. The memory management apparatus can be effectively applied to an embedded system which uses a limited resource and a low performance component.

The effects of the present invention are not limited to the effects mentioned above, and other effects which are not mentioned above may be apparently understood by one skilled in the art through the above detailed description.

The foregoing detailed description illustrates the present invention. In addition, the foregoing is intended to illustrate and describe the exemplary embodiments of the present invention, but the present invention may be utilized in various other combinations, modifications, and environments. That is, the present invention may be changed or modified within the scope of the concept of the present invention disclosed in the specification, the scope equivalent to the disclosure, and/or the scope of the technology or knowledge in the field to which the present invention pertains. The above-described embodiments have been provided to explain the best state in carrying out the present invention. Therefore, the embodiments may be carried out in other states known to the field to which the present invention pertains in using other inventions such as the present invention and also be modified in various forms required in specific application fields and usages of the invention. Accordingly, the detailed description of the present invention is not intended to restrict the present invention in the disclosed embodiment state. Furthermore, it should be construed that the attached claims include other embodiments.

## Claims

1. A memory management apparatus of an inverter, which stores and manages pieces of information about a plurality of allocation regions allocated to a memory buffer in a memory map as a plurality of elements, the memory management apparatus comprising:
an index setting unit configured to set map indexes in the plurality of elements stored in the memory map;
an index storing unit configured to store each of the map indexes in a corresponding one of the plurality of allocation regions allocated to the memory buffer; and
an element searching unit configured to search the memory map for the elements using the map indexes stored in the memory buffer.

2. The memory management apparatus of claim 1, further comprising a data deleting unit which changes a use state of the element found by the element searching unit from in use to not in use and deletes the data stored in the memory buffer.

3. The memory management apparatus of claim 1 or 2, wherein the index storing unit stores the map index in a start address of each of the plurality of allocation regions.

4. The memory management apparatus of claim 3, wherein the memory buffer stores the data from an address subsequent to the start address in which the map index is stored.

5. The memory management apparatus of claim 4, wherein the element searching unit accesses an address immediately preceding an address in which data to be deleted is stored, reads the map index, and accesses the element including the read map index.

6. The memory management apparatus of claim 1 or 2, wherein the memory map stores attribute information including the map index, a size of the allocation region, a start address, and a use state for each of the plurality of elements.

7. A memory management method of an inverter, in which pieces of information about a plurality of allocation regions allocated to a memory buffer are stored and managed in a memory map as a plurality of elements, the memory management method comprising:
setting map indexes in the plurality of elements stored in the memory map;
storing each of the map indexes in a corresponding one of the plurality of allocation regions allocated to the memory buffer; and
searching the memory map for the elements using the map indexes stored in the memory buffer.

8. The memory management method of claim 7, further comprising changing a use state of the found element from in use to the not in use and deleting data stored in the memory buffer.

9. The memory management method of claim 7 or 8, wherein the storing of the map index includes storing the map index in a start address of each of the plurality of allocation regions and storing data from an address subsequent to the start address in which the map index is stored.

10. The memory management method of claim 9, wherein the searching for the elements includes accessing an address immediately preceding an address in which data to be deleted is stored, reading the map index, and accessing the element including the read map index.
